# EUROPEAN PATENT SPECIFICATION

(11) **EP 0 317 119 B1**
(45) Date of publication and mention of the grant of the patent: **06.03.1996**
(21) Application number: 88310266.7
(22) Date of filing: 01.11.1988
(51) Int. Cl.: G06F 9/28

(54) **Next microinstruction generator in a microprogram control unit**
Folgemikrobefehlserzeuger in einer Mikroprogrammsteuereinheit
Générateur de micro-instruction suivante, dans une unité de commande à micro-instructions

(30) Priority: 05.11.1987 US 117108
(43) Date of publication of application: 24.05.1989
(73) Proprietor: RAYTHEON COMPANY, Lexington Massachusetts 02173 (US)
(72) Inventor: Feil, Peter J., Framingham Massachusetts (US)
(74) Representative: Jackson, David Spence

(56) References cited:
- EP-A- 0 190 484

## Description

### A MICROPROGRAM CONTROL UNIT

This invention relates to a microprogram control unit, comprising:
memory means for storing a plurality of microinstructions;
means coupled to address inputs of the memory means for supplying thereto during the current microinstruction cycle both a branch address from a current microinstruction being executed and a no-branch address for accessing the memory means sequentially in relation to the address of the current microinstruction;
means coupled to the address supplying means for incrementing the address supplied to the address inputs of the memory means; and
means coupled to outputs of the memory means for selecting a branch microinstruction or a no-branch microinstruction accessed by the said branch and no-branch addresses respectively.

It has become commonplace in the computer industry to develop data processors which include control stores comprising a plurality of microinstructions for controlling the operation of such data processors. These control stores are addressed based upon the contents of such microinstructions as well as other inputs depending upon the operation being executed in a data processor. Fetching the next microinstruction with its address conditionally based upon status information resulting from the execution of the current microinstruction is important in the data processor. If this was not done, then an additional microinstruction would be required because conditional addressing must be based upon status information generated by the execution of the previous microinstruction. Microprogram control and microinstruction design in the prior art are described in many references, one of which is "Digital System Design with LSI Bit-Slice Logic", Glenford J. Myers, John Wiley & Sons, Inc., 1980.

In addition, it is important that the fetching of the next microinstruction be performed in concurrence with the execution of the current microinstruction by the data processor.

If this was not accomplished, the microinstruction execution time would be the sum of data processor execution time and the control store access time, and thus the total execution time would be significantly increased. Accordingly, it is desireable to fetch the next microinstruction with its address conditionally based upon status information resulting from the execution of the current microinstruction by the data processor in concurrence with the execution of the current microinstruction by the data processor. By providing such capability, the performance of the data processor is improved by neither requiring additional microinstructions nor slowing the microinstruction cycle time. Such a microprogram control store is shown and described in U.S. Patent No. 4,587,611 to Gene M. Amdahl and Hsiao-Peng S. Lee and assigned to Amdahl Corporation of Sunnyvale, California. In Amdahl et al., a microprogram sequencing apparatus is disclosed having two or more control stores which enable a nonbranch address to fetch a first microinstruction from a first control store and a branch address to fetch a second microinstruction from a second control store. Since microinstructions from the branch and nonbranch addresses are concurrently available, no delay is encountered after the state of the branch condition is determined. However, additional hardware for each control store is required to implement such microprogram sequencing apparatus.

EP-A-0 190 484 describes a microprogram control unit of the kind defined hereinbefore at the beginning in which a prefetch register is loaded from the memory (the control store) with the no-branch microinstruction in the first half cycle, and a prefetch buffer passes the branch microinstruction from the memory in the second half cycle. Control signals generated by an arithmetic and logic unit in response to the microinstruction being currently executed transfer a selected one or other of these no-branch and branch microinstructions to a microword register for execution in the next cycle. A branch address in the microinstruction in the microword register is supplied from that register through a branch address forwarding circuit to an address multiplexer. The multiplexer also receives the address of the next microinstruction in sequence to the one currently being executed. The address multiplexer is controlled to apply to the memory the next sequential address in the first half of a cycle and the branch address in the second half. To generate the next sequential address, the unit includes a program counter with an adder in a loop for generating a sequence of addresses, and a branch latch with an adder for generating the next address in sequence after the currently applied branch address if the corresponding branch microinstruction is selected for execution. The respective incremented addresses derived from the program counter and the branch latch are supplied to separate inputs of a further multiplexer that supplies the address multiplexer.

According to one aspect of the present invention a microprogram control unit of the kind defined hereinbefore at the beginning is characterised in that means are provided for selectively generating or not generating a first enable signal and a second enable signal in dependence upon the current microinstruction being executed;
in that the incrementing means is adapted to generate a next sequential address following the address for each microinstruction accessed by the address supplying means;
in that means are coupled between an output of the address incrementing means and an input of the address supplying means for selectively storing a next sequential microinstruction address at the end of the current microinstruction cycle in dependence upon the selective generation or not of said first or second enable signal by the enable signal generating means;
and in that the microinstruction selecting means is adapted to operate in response to said first or second enable signal selectively generated or not by the enable signal generating means during the current microinstruction cycle.

According to another aspect of the invention, a method of accessing microinstructions stored in an addressable memory, comprises the steps of:
accessing the memory during a current microinstruction cycle with both a branch address from a current microinstruction being executed and a no-branch address that is sequential in relation to the address of the said current microinstruction;
generating an incremented address from an address by which the memory is accessed; and
selecting either a branch microinstruction or a no-branch microinstruction respectively accessed by a branch address or a no branch address, the method being characterised in that the step of generating an incremented address comprises incrementing the address of each microinstruction being accessed in the memory and thereby providing a next sequential address, and storing a selected next sequential address at the end of the current microinstruction cycle;
and in that a first enable signal and a second enable signal are each generated or not in dependence upon the current microinstruction being executed, the selection of the said branch microinstruction or the said no-branch microinstruction and of the said next sequential address being dependent upon the generation or not of the first and second enable signals.

In accordance with a preferred embodiment of the present invention, a microprogram control unit of a data processing system fetches from a single microprogram memory both a branch microinstruction and a no-branch microinstruction during a current microinstruction cycle and selects one of the accessed microinstructions to be the next microinstruction executed based on the state of at least one condition signal during the current microinstruction cycle. A microinstruction word stored in the microprogram memory has a field that may be used as a branch address. An incrementer provides a next-in-order address as required during the microinstruction cycle.

The preferred microprogram control unit has microinstruction selection and latching means coupled to the output of the memory for providing either a current output of the memory or a previously latched output of the memory in accordance with the state of at least one condition signal generated during a current microinstruction cycle, a microinstruction register for storing a current microinstruction coupled to the output of the microinstruction selection and latching means, incrementer means for computing a next sequential address, address selection and latching means coupled to an output of the incrementer means for providing either the current output of the incrementer means or the previously latched output of the incrementer means in accordance with the state of the condition signal generated during the current microinstruction cycle, an address register for storing the next sequential address after the current microinstruction coupled to the output of the address selection and latching means, input control means for sequentially coupling an output of the address register and the branch address field of the current microinstruction to the inputs of the memory and the incrementer means during each microinstruction cycle, and output control means for generating a selection signal for controlling the microinstruction selection and latching means and the address selection and latching means in accordance with the condition signal generated during the current microinstruction.

Operation of the preferred embodiment comprises the steps of storing a plurality of microinstructions in the single memory, each one of the microinstructions having a field which may be used as a branch address for addressing the memory, generating a next-in-order address, providing in sequence the next-in-order address and the branch address field of a current microinstruction to the memory means during each microinstruction cycle and selecting one of the outputs of the memory for a next microinstruction in accordance with the state of at least one condition signal generated during the current microinstruction cycle.

### Brief Description of the Drawings

Other and further features and advantages of the invention will become apparent in connection with the accompanying drawings wherein:
FIG. 1 is a block diagram of data processor showing a microprogram control unit for fetching microinstructions according to the invention; and
FIG. 2 is a timing diagram showing the contents of the microprogram control unit registers and latches for six typical microinstruction cycles.

### Description of the Preferred Embodiment

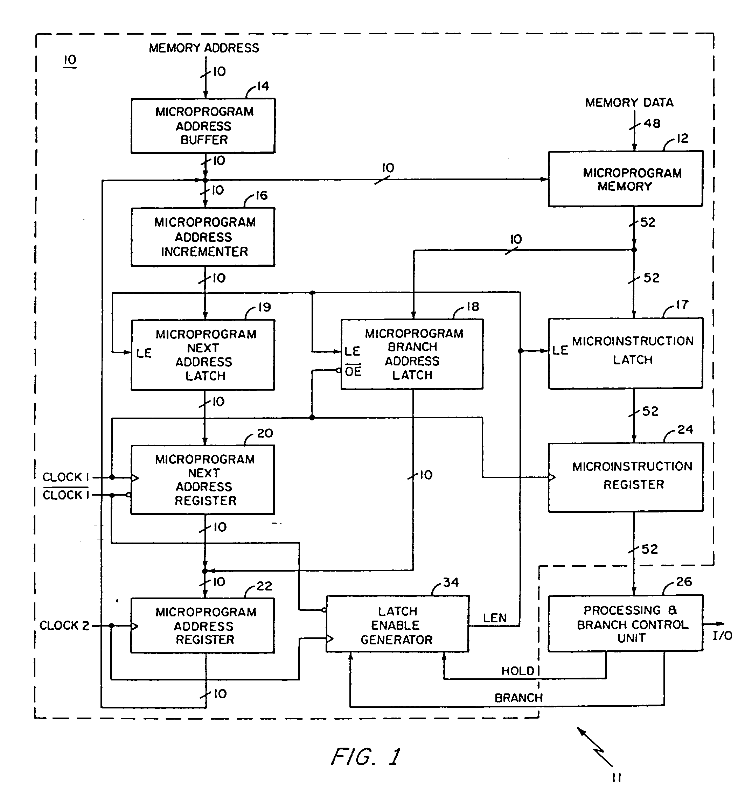

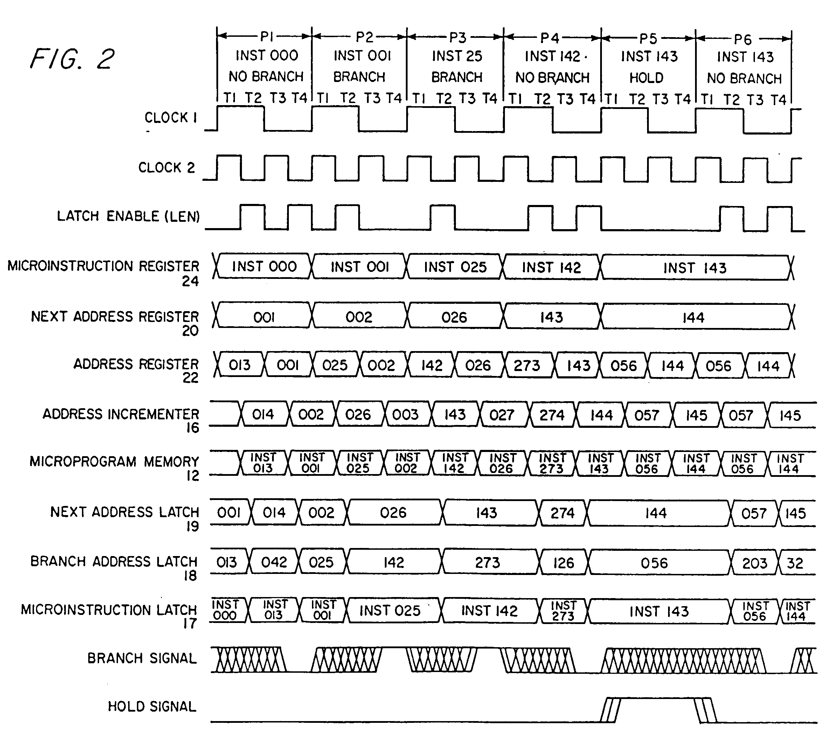

Referring now to FIG. 1, there is shown a functional block diagram of a data processor 11 having a microprogram control unit 10 with the capability of fetching the next microinstruction based upon a branch/no-branch condition determined by the processing of the current microinstruction and in concurrence with this processing. A microprogram memory 12 comprises a plurality of stored microinstructions for implementing an operation required within a digital system. When the microprogram memory 12 is a write random access memory, then a microprogram address buffer 14, which is connected to the microprogram memory 12 address lines, provides addresses for memory locations to be loaded with microinstructions or other information. A microprogram address register 22 is also connected to the address lines of the microprogram memory 12 and provides the addresses for reading microinstructions from the microprogram memory 12 to be executed by the processing and branch control unit 26. Each word read from the microprogram memory 12 is coupled to a microinstruction latch 17 which operates as described hereinafter with reference to figure 2, and the outputs from the microinstruction latch 17 are connected to a microinstruction register 24. The microinstruction register 24 stores a microinstruction word during its execution which controls the operation of a processing and branch control unit 26. The processing and branch control unit 26 performs arithmetic and logical operations on data under macroprogram control stored therein.

Still referring to FIG. 1, a microprogram address incrementer 16 is coupled to the outputs of microprogram address register 22 and the microprogram address buffer 14. When an address is transferred to the microprogram address incrementer 16, the address is incremented by one and the output from the microprogram address incrementer 16 is coupled to a microprogram next address latch 19. The microprogram address incrementer 16 operates on only 5 bits of the 10 bit address fed to it and the other 5 address bits are transferred directly through it since addressing is based on a 32 word page using branching to go from one page to another. The outputs of the microprogram next address latch 19 are connected to a microprogram next address register 20. The inputs of the microprogram address register 22 are connected to the outputs of the microprogram next address register 20 and also connected to the outputs of the microinstruction branch address latch 18. The inputs of the microinstruction branch address latch 18 are connected to a field of the outputs from the microprogram memory 12 which for some microinstructions contains a branch address. The latch enable generator 34 comprises and-or-invert logic known to one skilled in the art for generating a latch enable (LEN) signal in accordance with the assertion of HOLD and BRANCH signals. The HOLD and BRANCH signals are generated by the processing and branch control unit 26 and such signals in combination with CLOCK1 and CLOCK2 produce the LEN signal for coupling to the microinstruction latch 17, microprogram branch address latch 18 and microprogram next address latch 19. The logic state of the HOLD and BRANCH signals control whether a no-branch, a branch or a hold (repeat current microinstruction) operation shall occur.

Referring now to FIG. 1 and FIG. 2, the operation of the microprogram control unit 10 will be described. FIG. 2 is a timing diagram showing the operations being performed within the microprogram control unit 10 during six microinstruction cycles or periods P1 to P6, each microinstruction cycle comprising four timing periods, T1, T2, T3, and T4. The microinstructions shown comprise no-branch, branch and hold (repeat a microinstruction) operations. In the preferred embodiment, CLOCK1 has a 50% duty cycle and a period of 89.6 ns. CLOCK2 has a 50% duty cycle and a period of 44.8 ns. The start of a microinstruction is defined as the concurrent rising edges of CLOCK1 and CLOCK2 .The four timing periods T1, T2, T3, and T4 are each 22.4 ns in duration and are deliniated by the rising and falling edges of CLOCK2. The operation of the microprogram control unit 10 is controlled by two signals, BRANCH and HOLD from the processing and branch control unit 26 while executing the current microinstruction in the microinstruction register 24. BRANCH is sent from the processing and branch control unit 26 during T4 to indicate, if true, that the next microinstruction should be fetched from the address in the branch address field of the microinstruction, and if false, that the next microinstruction should be fetched from the next sequential address after the current microinstruction. HOLD is sent from the processing and branch control unit 26 during T2, T3, and T4 to indicate, if true, that the next microinstruction should be the same microinstruction as the one currently being executed, and if false, that the normal execution described above be performed.

As will be seen in the following description, at the completion of a microinstruction cycle, the microinstruction latch 17 will contain the next microinstruction, the microprogram branch address latch 18 will contain the possible branch address field of that next microinstruction, and the microprogram next address latch 19 will contain the next sequential address after that next microinstruction. At the start of a microinstruction cycle the next microinstruction is transferred from the microinstruction latch 17 to the microinstruction register 24, becoming the current microinstruction. Also, the microprogram next sequential address is transferred from the microprogram next address latch 19 to the microprogram next address register 20, and the microprogram branch address is transferred from the microprogram branch address latch 18 to the microprogram address register 22. The microprogram address register 22 then presents the microprogram branch address to the microprogram memory 12 and the microprogram address incrementer 16. During T1 and T2, the microprogram memory 12 accesses the branch address and before the end of T2 has present at its outputs the addressed microinstruction. Also during T1 and T2, the microprogram address incrementer 16 increments the branch address and before the end of T2 has present at its outputs the branch address plus one. During T2, if HOLD is false, then the signal LEN is asserted enabling the inputs of the microinstruction latch 17, the microprogram branch address latch 18, and the microprogram next address latch 19, thereby loading the microinstruction latch 17 with the possible branch addressed microinstruction from the microprogram memory 12, loading the microprogram branch address latch 18 with the branch address field of that microinstruction from the microprogram memory 12, and loading the microprogram next address latch 19 with next sequential address after that microinstruction from the microprogram address incrementer 16.

At the start of T3 the microprogram next sequential address is transferred from the microprogram next address register 20 to the microprogram address register 22. The microprogram address register 22 then presents the microprogram next address to the microprogram memory 12 and the microprogram address incrementer l6. During T3 and T4, the microprogram memory 12 accesses the next address and before the end of T4 has present at its outputs the addressed microinstruction. Also, during T3 and T4, the microprogram address incrementer 16 increments the next address and before the end of T4 has present at its outputs the next address plus one (current address plus 2). During T4, if HOLD is false and BRANCH is false, the signal LEN is again asserted thereby loading the microinstruction latch 17 with the next sequential microinstruction from the microprogram memory 12, loading the microprogram branch address latch 18 with the branch address field of that microinstruction from the microprogram memory 12, and loading the microprogram next address latch 19 with the current address plus two from the microprogram address incrementer 16.

The contents of the microinstruction latch 17, the microprogram branch address latch 18, and the microprogram next address latch 19 now contain the data required to execute the next microinstruction. If HOLD was true during T2, T3, and T4, these latches contain the same data as they did at the end of the last microinstruction because LEN was not asserted during this microinstruction cycle. Otherwise, if BRANCH was true during T4, these latches 17, 18 and 19 contain the data required to execute the microinstruction addressed by the branch field of the current microinstruction. Otherwise, such latches contain the data required to execute the next sequential microinstruction.

Table 1 is a list of microinstruction addresses corresponding to the address numbers used in FIG. 2, and defines a conditional branch address for a branch address field of a microinstruction stored in each microinstruction address. Therefore, for the six microinstruction cycles shown in FIG. 2 comprising no-branch, branch and hold operations, the contents of each register and latch is defined for each of the time periods T1 to T4 within each microinstruction cycle or period (P1 to P6).

**Table 1**

| Microinstruction Address | Conditional Branch Address |
|---|---|
| 000 | 013 |
| 001 | 025 |
| 013 | 042 |
| 025 | 142 |
| 056 | 203 |
| 142 | 273 |
| 143 | 056 |
| 144 | 032 |
| 273 | 126 |

For example, at the start of microinstruction cycle P1 the next microinstruction from address 000, which is temporarily in the microinstruction latch 17, is loaded into the microinstruction register 24. Also, the microprogram next address 001 is transferred from the microprogram next address latch 19 to the next address register 20, and the microprogram branch address 013 is transferred from the microprogram branch address latch 18 to the microprogram address register 22. The microprogram address register 22 then addresses the microprogram memory 12 with the branch address 013 and also transfers branch address 013 to the microprogram address incrementer 16 to be incremented by 1. During T1 and T2, the branch address 013 is accessed in microprogram memory 12 and the microinstruction is available at the memory 12 outputs. During T2, if the HOLD signal is false, then the signal LEN is asserted which loads the microinstruction from microprogram memory address 013 (INST 013) into the microinstruction latch 17, the address 014 from the microprogram address incrementer 16 into the microprogram next address latch 19, and the branch address 042 into the microprogram branch address latch 18. As shown in Table 1, the conditional branch address of the microinstruction stored in microprogram memory address location 013 is 042.

At the start of T3 during P1, address 001 in the microprogram next address register 20 is transferred to the microprogram address register 22 which presents address 001 to the microprogram memory, and during T3 and T4, the microinstruction stored in address 001 (INST 001) is available at the microprogram memory outputs. Also, during T3 and T4 address 001 is sent to the microprogram address incrementer 16 where it is incremented by one to 002 (current address 000 + two). During T4, since the HOLD signal is false and the BRANCH signal is false, the signal LEN is again asserted thereby loading the microprogram branch address latch 18 with address 25 (which is the branch address in the microinstruction just read from microprogram memory address 001 (see Table 1), loading the microinstruction latch 17 with the next sequential microinstruction from memory address 001 and loading the microprogram next address latch 19 with 002 from the microprogram address incrementer 16.

At the start of cycle P2 the next microinstruction from address 001 is loaded into the microinstruction register 24 from the microinstruction latch 17 because no BRANCH signal occurred during cycle P1; also the microprogram next address 002 is transferred from the microprogram next address latch 19 to the next address register 20, and the branch address 025 is transferred from the microprogram branch address latch 18 to the microprogram address register 22. The microprogram address register 22 then addresses the microprogram memory 12 with the branch address 025, and also transfers branch address 025 to the microprogram address incrementer 16 to be incremented by 1. During T1 and T2 the branch address 025 is accessed in microprogram memory 12 and the microinstruction from address 025 is available at the memory 12 outputs. During T2 since the HOLD signal is false, the signal LEN is asserted which loads the microinstruction from the microprogram address 025 into the microinstruction latch 17, the address 026 from the microprogram address incrementer 16 into the microprogram next address latch 19 and the branch address 142 into the microprogram branch address latch 18. As shown in Table 1, the conditional branch address of the microinstruction stored in microprogram memory address location 025 is 142.

At the start of T3 during P2, address 002 in the microprogram next address register 20 is transferred to the microprogram address register 22 which presents address 002 to the microprogram memory, and during T3 and T4 the microinstruction stored in address 002 is available at the microprogram memory outputs. However, during T4, since the HOLD signal is false but the BRANCH signal is true, a LEN signal does not occur so the contents of the microinstruction latch 17, the branch address latch 18 and the next address latch 18 do not change and their contents at the end of T2 remain the same at the end of T4 of P2, thereby providing for a branch address 25 operation to occur at the start of cycle P3. Likewise for microinstruction cycles P3 to P6, FIG. 2 shows the contents of the various elements of the microprogram control unit 10 during the time periods T1 to T4 of each cycle and based on the branch address defined in Table 1.

Referring again to FIG. 1, in the present embodiment the microprogram memory 12 is implemented with a a 1024 word X 52 bit static read/write RAM. When it is loaded with microinstructions and other information, a 48 bit word is provided on the memory data lines. However, four additional bits beyond the 48 bit microinstruction are stored in the microprogram memory 12 in bit positions 48 to 51. These four additional bits beyond the 48 bit microinstruction are decodes of certain fields of the microinstruction which cannot be decoded during the microinstruction execution due to timing constraints; hence, the decodes are performed at the inputs of microprogram memory 12 as it is loaded.

The microprogram memory 12 comprises 13 devices (each being 1024 x 4 bits), part number AM 9150, manufactured by Advanced Micro Devices of Sunnyvale, Ca. 94088. The 54/74F type FAST integrated circuits may be used to implement the design of the microprogrammed control unit 10, and they are readily known to one skilled in the art. The microprogram address buffer 14 comprises two F244 octal buffers. The microprogram address incrementer 16 comprises an F283 4-bit binary full adder with fast carry, and a 2 input exclusive-or gate (one quarter of an F86) implementing a 5-bit incrementer which provides a 32 microinstruction page size. The microinstruction latch 17, the microprogram branch address latch 18, and the microprogram next address latch 19, comprise nine F373 octal transparent latches with 3-state outputs. The microprogram next address register 20, comprises a pair of F374 octal D-type flip-flops with 3-state outputs. The microprogram address register 22 comprises a pair of F374 octal D-type flip-flops with 3-state outputs. The microinstruction register 24 comprises four F374 octal D-type flip-flops with 3-state outputs, a pair of F174 Hex D-type flip-flops with master reset, and a part of F175 Quad D-type flip-flops with complementary outputs and with master reset. The latch enable generator 34 comprises an F64 AND/OR invert gate. All of these TTL devices are manufactured by Fairchild of Mt. View, CA 94042.

## Claims

1. A microprogram control unit, comprising:
memory means (12) for storing a plurality of microinstructions;
means (22) coupled to address inputs of the memory means (12) for supplying thereto during the current microinstruction cycle both a branch address from a current microinstruction being executed and a no-branch address for accessing the memory means (12) sequentially in relation to the address of the current microinstruction;
means (16) coupled to the address supplying means (22) for incrementing the address supplied to the address inputs of the memory means (12) ; and
means (17) coupled to outputs of the memory means (12) for selecting a branch microinstruction or a no-branch microinstruction accessed by the said branch and no-branch addresses respectively,
the microprogram control unit being characterised in that means (26,34) are provided for selectively generating or not generating a first enable signal and a second enable signal in dependence upon the current microinstruction being executed;
in that the incrementing means (16) is adapted to generate a next sequential address following the address for each microinstruction accessed by the address supplying means (22);
in that means (19,20) are coupled between an output of the address incrementing means (16) and an input of the address supplying means (22) for selectively storing a next sequential microinstruction address at the end of the current microinstruction cycle in dependence upon the selective generation or not of said first or second enable signal by the enable signal generating means (26,34);
and in that the microinstruction selecting means (17) is adapted to operate in response to said first or second enable signal selectively generated or not by the enable signal generating means (26,34) during the current microinstruction cycle.

2. A microprogram control unit according to claim 1, characterised in that the address supplying means comprises an address register (22) adapted to supply to the address inputs of the memory means (12) in clocked sequence during a current microinstruction cycle both the said branch address and the said no-branch address;
in that the storing means coupled between the address incrementing means (16) and the address supplying means (22) comprise next address selection and latching means (19) coupled to the output of the address incrementing means (16) for temporarily storing either the currently output incremented address from the incrementing means (16) or a previously latched output incremented address from the incrementing means, in response to enable signals supplied to the next address selection and latching means (19), and a next address register (20) adapted to store the next sequential address relative to the address of the currently executing microinstruction, the next address register (20) having inputs coupled to outputs of the selection and latching means (19) for receiving a latched incremented address, and outputs coupled to inputs of the address register (22) to supply the stored next address; and in that the microinstruction selecting means comprises microinstruction selection and latching means (17) adapted to latch, selectively in response to the first and second enable signals, respective microinstructions accessed by the branch and no-branch addresses supplied to the memory means (12), and a microinstruction register (24) is coupled to the microinstruction selection and latching means (17) for storing a latched microinstruction as the current microinstruction for execution.

3. A microprogram control unit according to claim 1 or 2, characterised in that the memory means (12) has outputs for a branch address field of an accessed microinstruction, and in that branch address selection and latching means (18) having inputs coupled to the branch address field outputs of the memory means (12) are provided for temporarily storing a selected branch address, the branch address selection and latching means (18) being adapted to latch a branch address in response to a first or second enable signal supplied thereto by the enable signal generating means (26,34) and having outputs coupled to the address supplying means (22) whereby a latched branch address can be supplied to the address supplying means (22).

4. A microprogram control unit according to any preceding claim, characterised in that the enable signal generating means comprise means (26) responsive to the current microinstruction being executed for generating command signals indicative of the type of address for the next microinstruction to be executed, the said type being selected from branch, no-branch and repeat, and means (34) responsive to the command signals to generate in the current microinstruction cycle a first enable signal only, a first enable signal and a second enable signal, or no enable signals.

5. A microprogram control unit according to any preceding claim, characterised in that the memory means comprise a read/write random access memory (12) adapted to be loaded with the plurality of microinstructions.

6. A method of accessing microinstructions stored in an addressable memory, comprising the steps of:
accessing the memory (12) during a current microinstruction cycle with both a branch address from a current microinstruction being executed and a no-branch address that is sequential in relation to the address of the said current microinstruction;
generating an incremented address from an address by which the memory (12) is accessed; and
selecting either a branch microinstruction or a no-branch microinstruction respectively accessed by a branch address or a no branch address,
the method being characterised in that the step of generating an incremented address comprises incrementing the address of each microinstruction being accessed in the memory and thereby providing a next sequential address, and storing a selected next sequential address at the end of the current microinstruction cycle;
and in that a first enable signal and a second enable signal are each generated or not in dependence upon the current microinstruction being executed, the selection of the said branch microinstruction or the said no-branch microinstruction and of the said next sequential address being dependent upon the generation or not of the first and second enable signals.

7. A method according to claim 6, characterised in that each branch address for accessing the memory (12) is selected from branch addresses provided by the microinstructions accessed in the memory (12), the selection being effected in dependence upon the generation or not of the first and second enable signals in a microinstruction cycle.

8. A method according to claim 7, characterised in that the selection of the next sequential address, the microinstruction accessed from the memory (12), and the branch address is synchronised by the enable signals.

## Patentansprüche

1. Mikroprogramm-Steuereinheit mit:
- Speichermitteln (12) zur Speicherung einer Anzahl von Mikrobefehlen;
- an die Adresseingänge der Speichermittel (12) angekoppelten Einrichtungen (22) zur Lieferung während des gegenwärtigen Mikrobefehlszyklus sowohl einer Verzweigungsadresse von einem gegenwärtigen Mikrobefehl, der durchgeführt wird, als auch einer Nicht-Verzweigungsadresse an die Adresseingänge für den Zugriff auf die Speichermittel (12) in Folge abhängig von der Adresse des gegenwärtigen Mikrobefehls;
- Einrichtungen (16), welche an die adressliefernden Einrichtungen (22) angekoppelt sind, um die an die Adresseneingänge der Speichermittel (12) gelieferte Adresse zu inkrementieren; und
- an die Ausgänge der Speichermittel (12) angekoppelten Einrichtungen (17) zur Auswahl eines Verzweigungs-Mikrobefehls oder eines Nicht-Verzweigungs-Mikrobefehls, zu denen durch die genannte Verzweigungsadresse bzw. Nicht-Verzweigungsadresse Zugriff genommen wird,
wobei die Mikroprogramm-Steuereinheit *dadurch gekennzeichnet* ist,
- daß Einrichtungen (26, 34) zur selektiven Erzeugung oder Nichterzeugung eines ersten Wirksamschaltungssignales und eines zweiten wirksamschaltungssignales in Abhängigkeit von dem gerade ausgeführten gegenwärtigen Mikrobefehl vorgesehen sind;
- daß die Inkrementierungseinrichtungen (16) so ausgebildet sind, daß sie auf die Adresse für jeden Mikrobefehl, auf den durch die adressliefernden Einrichtungen (22) Zugriff genommen wird, folgend eine nächstfolgende Adresse erzeugen;
- daß zwischen einem Ausgang der adressinkrementierenden Einrichtungen (16) und einen Eingang der adressliefernden Einrichtungen (22) Mittel (19, 20) zur selektiven Speicherung eine nächstfolgenden Mikrobefehlsadresse am Ende des gegenwärtigen Mikrobefehlszyklus in Abhängigkeit von der selektiven Erzeugung oder Nichterzeugung des genannten ersten oder zweiten Wirksamschaltungssignales durch die wirksamschaltungssignalerzeugenden Einrichtungen (26, 34) geschaltet sind; und
- daß die mikrobefehlsauswählenden Einrichtungen (17) so ausgebildet sind, daß sie in Abhängigkeit von dem genannten ersten oder zweiten Wirksamschaltungssignal, welches selektiv durch die die Wirksamschaltungssignale erzeugenden Einrichtungen (26, 34) während des gegenwärtigen Mikrobefehlszyklus erzeugt werden oder nicht, in Tätigkeit treten.

2. Mikroprogramm-Steuereinheit nach Anspruch 1, *dadurch gekennzeichnet, daß* die adressliefernden Einrichtungen ein Adressregister (22) enthalten, das so ausgebildet ist, daß es an die Adresseingänge der Speichermittel (12) in getakteter Folge während eines gegenwärtigen Mikrobefehlszyklus sowohl die genannte Verzweigungsadresse als auch die genannte Nicht-Verzweigungsadresse liefert;
- daß die speichernden Einrichtungen, die zwischen die adressinkrementierenden Einrichtungen (16) und die adressliefernden Einrichtungen (22) geschaltet sind, Einrichtungen (19) für die Wahl und das Festhalten der nächsten Adresse enthalten, die an den Ausgang der adressinkrementierenden Einrichtungen (16) angekoppelt sind, um zeitweise entweder die gegenwärtig ausgegebene inkrementierte Adresse von den inkrementierenden Einrichtung (16) oder eine zuvor festgehaltene ausgegebene inkrementierte Adresse von den inkrementierenden Einrichtungen in Abhängigkeit von Wirksamschaltungssignalen zu speichern, die den Einrichtungen (19) zur Auswahl und zum Festhalten der nächsten Adresse zugeführt werden, und ein Register (20) für die nächste Adresse enthalten, das so ausgebildet ist, daß es die nächstfolgende Adresse relativ zur Adresse des gegenwärtig ausgeführten Mikrobefehls speichert, wobei das Register (20) für die nächste Adresse Eingänge, welche an Ausgänge der Einrichtungen (19) zur Auswahl und zum Festhalten für die Aufnahme einer festgehaltenen inkrementierten Adresse angekoppelt sind, und Ausgänge aufweist, die an Eingänge des Adressregisters (22) angekoppelt sind, um die gespeicherte nächste Adresse zu liefern;
- daß die mikrobefehlsauswählenden Einrichtungen Einrichtungen (17) enthalten, welche so ausgebildet sind, daß sie selektiv in Abhängigkeit von den ersten und zweiten Wirksamschaltungssignalen jeweilige Mikrobefehle, auf die durch die von den Speichermitteln (12) gelieferten Verzweigungs- oder Nichtverzweigungsadressen Zugriff genommen wird, festhalten, und
- daß ein Mikrobefehlsregister (24) an die Einrichtungen (17) für die Auswahl und das Festhalten von Mikrobefehlen angekoppelt ist, um einen festgehaltenen Mikrobefehl als den gegenwärtigen Mikrobefehl für die Durchführung zu speichern.

3. Mikroprogramm-Steuereinheit nach Anspruch 1 oder 2, *dadurch gekennzeichnet, daß* die Speichermittel (12) Ausgänge für ein Verzweigungsadressenfeld eines angewählten Mikrobefehls aufweisen und daß Einrichtungen (18) zur Auswahl und zum Festhalten von Verzweigungsadressen Eingänge aufweisen, die an die Verzweigungs-Adressenfeldausgänge der Speichermittel (12) angekoppelt sind und zum zeitweisen Speichern einer gewählten Verzweigungsadresse vorgesehen sind, wobei die Einrichtungen (18) zur Auswahl und zum Festhalten der Verzweigungsadresse so ausgebildet sind, daß sie eine Verzweigungsadresse in Abhängigkeit von einem ersten oder zweiten Wirksamschaltungssignal festhalten, das ihnen durch die wirksamschaltungssignalerzeugenden Einrichtungen (26, 34) zugeführt wird, und wobei sie Ausgänge aufweisen, die an die adressliefernden Einrichtungen (22) angekoppelt sind, so daß eine festgehaltene Verzweigungsadresse an die adressliefernden Einrichtungen (22) abgegeben werden kann.

4. Mikroprogramm-Steuereinheit nach einem der vorhergehenden Ansprüche, *dadurch gekennzeichnet, daß* die wirksamschaltungssignalerzeugenden Einrichtungen Mittel (26) enthalten, die auf den gegenwärtig ausführten Mikrobefehl ansprechen, um Befehlssignale zu erzeugen, die die Art der Adresse für den nächstens durchzuführenden Mikrobefehl anzeigen, wobei die genannte Art aus "Verzweigung", "Nichtverzweigung" oder "Wiederholung" ausgewählt wird, und weiter Mittel (34) enthalten, welche auf die Befehlssignale ansprechen, um in dem gegenwärtigen Mikrobefehlszyklus nur ein erstes Wirksamschaltungssignal, ein erstes und ein zweites Wirksamschaltungssignal, oder kein Wirksamschaltungssignal zu erzeugen.

5. Mikroprogramm-Steuereinheit nach irgendeinem der vorhergehenden Ansprüche, *dadurch gekennzeichnet, daß* die Speichermittel einen Eingabe-Ausgabespeicher (12) wahlfreien Zugriffs enthalten, der mit einer Anzahl von Mikrobefehlen geladen werden kann.

6. Verfahren zur Entnahme von Mikrobefehlen, welche in einem adressierbaren Speicher gespeichert sind, mit folgenden Schritten:
Adressierung des Speichers (12) während eines gegenwärtigen Mikrobefehlszyklus mit sowohl einer Verzweigungsadresse von einem gegenwärtigen Mikrobefehl, welcher gerade ausgeführt wird, als auch einer Nichtverzweigungsadresse, welche relativ zur Adresse des gegenwärtigen Mikrobefehls in Folge liegt;
Erzeugen einer inkrementierten Adresse von einer Adresse, mit welcher der Speicher (12) adressiert wird; und Auswahl entweder eines Verzweigungs-Mikrobefehls oder eines Nichtverzweigungs-Mikrobefehls, auf den durch eine Verzweigungsadresse bzw. eine Nicht-Verzweigungsadresse Zugriff genommen wird,
wobei das Verfahren *dadurch gekennzeichnet ist,* daß der Schritt des Erzeugens einer inkrementierten Adresse jedes in dem Speicher gerade angewählten Mikrobefehls und damit die Schaffung einer nächst folgenden Adresse, sowie das Speichern einer gewählten nächstfolgenden Adresse an dem Ende des gegenwärtigen Mikrobefehlszyklus umfaßt;
und daß ein erstes Wirksamschaltungssignal und ein zweites Wirksamschaltungssignal in Abhängigkeit von dem gegenwärtigen, gerade ausgeführten Mikrobefehl jeweils erzeugt werden oder nicht, wobei die Auswahl des verzweigungs-Mikrobefehls oder des Nicht-Verzweigungs-Mirkobefehls und der nächstfolgenden Adresse von der Erzeugung oder Nichterzeugung des ersten und zweiten Wirksamschaltungssignals abhängig ist.

7. Verfahren nach Anspruch 6, *dadurch gekennzeichnet, daß* jede Verzweigungsadresse für die Zugriffnahme auf den Speicher (12) aus Verzweigungsadressen ausgewählt wird, die durch die Mikrobefehle geliefert werden, auf welche in dem Speicher (12) Zugriff genommen wird, wobei die Auswahl in Abhängigkeit von der Erzeugung oder Nichterzeugung des ersten und zweiten Wirksamschaltungssignals in einem Mikrobefehlszyklus getroffen wird.

8. Verfahren nach Anspruch 7, *dadurch gekennzeichnet, daß* die Auswahl der nächstfolgenden Adresse, des von dem Speicher (12) herausgegriffenen Mikrobefehls und der Verzweigungsadresse mit den Wirksamschaltungssignalen synchronisiert ist.

## Revendications

1. Unité de commande à microprogramme, comprenant :
des moyens de mémorisation (12) pour stocker une pluralité de micro-instructions;
des moyens (22) couplés à des entrées d'adresse des moyens de mémorisation (12) pour leur envoyer durant le cycle de micro-instruction en cours, à la fois une adresse de branchement d'une micro-instruction en cours d'exécution et une adresse de non-branchement pour accéder aux moyens de mémorisation (12) séquentiellement en relation avec l'adresse de la micro-instruction en cours;
des moyens (16) couplés aux moyens d'envoi d'adresse (22) pour incrémenter l'adresse envoyée aux entrées d'adresse des moyens de mémorisation (12); et
des moyens (17) couplés à des sorties des moyens de mémorisation (12) pour sélectionner une micro-instruction de branchement ou une micro-instruction de non-branchement accédée par lesdites adresses de branchement et de non-branchement respectivement,
l'unité de commande à microprogramme étant caractérisée en ce que des moyens (26,34) sont prévus pour sélectivement engendrer ou ne pas engendrer un premier signal de validation et un second signal de validation en fonction de la micro-instruction en cours d'exécution,
en ce que les moyens d'incrémentation (16) sont adaptés pour engendrer une adresse séquentielle suivante à la suite de l'adresse pour chaque micro-instruction accédée par les moyens d'envoi d'adresse (22),
en ce que des moyens (19,20) sont couplés entre une sortie des moyens d'incrémentation d'adresse (16) et une entrée des moyens d'envoi d'adresse (22) pour stocker sélectivement une adresse de micro-instruction séquentielle suivante à la fin du cycle de micro-instruction en cours, en fonction de la génération ou non sélective dudit premier ou second signal de validation par les moyens de génération de signal de validation (26,34); et
en ce que les moyens de sélection de micro-instruction (17) sont adaptés pour fonctionner en réponse audit premier ou second signal de validation sélectivement engendré ou non par les moyens de génération de signal de validation (26,34) durant le cycle de micro-instruction en cours.

2. Unité selon la revendication 1, caractérisée en ce que les moyens d'envoi d'adresse comprennent un registre d'adresse (22) adapté pour envoyer aux entrées d'adresse des moyens de mémorisation (12) en séquence cadencée par horloge durant un cycle de micro-instruction en cours, à la fois ladite adresse de branchement et ladite adresse de non-branchement,
en ce que les moyens de mémorisation couplés entre les moyens d'incrémentation d'adresse (16) et les moyens d'envoi d'adresse (22) comprennent des moyens de verrouillage et de sélection d'adresse suivante (19) couplés à la sortie des moyens d'incrémentation d'adresse (16) pour stocker de façon temporaire, soit l'adresse incrémentée de sortie en cours à partir des moyens d'incrémentation (16), soit une adresse incrémentée de sortie verrouillée au préalable à partir des moyens d'incrémentation, en réponse aux signaux de validation envoyés aux moyens de verrouillage et de sélection d'adresse suivante (19) et un registre d'adresse suivante (20) adapté pour stocker l'adresse séquentielle suivante relative à l'adresse de la micro-instruction en cours d'exécution, le registre d'adresse suivante (20) ayant des entrées couplées à des sorties des moyens de verrouillage et de sélection (19) pour recevoir une adresse incrémentée verrouillée et des sorties couplées à des entrées du registre d'adresse (22) pour envoyer l'adresse suivante stockée; et
en ce que les moyens de sélection de micro-instruction comprennent des moyens de verrouillage et de sélection de micro-instruction (17) adaptés pour verrouiller, sélectivement en réponse aux premier et second signaux de validation, des micro-instructions respectives accédées par les adresses de branchement et de non-branchement envoyées aux moyens de mémorisation (12), et un registre de micro-instruction (24) est couplé aux moyens de verrouillage et de sélection de micro-instruction (17) pour stocker une micro-instruction verrouillée en tant que micro-instruction en cours pour exécution.

3. Unité selon la revendication 1 ou 2, caractérisée en ce que les moyens de mémorisation (12) possèdent des sorties pour un champ d'adresse de branchement d'une micro-instruction accédée et en ce que des moyens de verrouillage et de sélection d'adresse de branchement (18) ayant des entrées couplées aux sorties de champ d'adresse de branchement des moyens de mémorisation (12), sont prévus pour stocker de façon temporaire une adresse de branchement sélectionnée, les moyens de verrouillage et de sélection d'adresse de branchement (18) étant adaptés pour verrouiller une adresse de branchement en réponse à un premier ou un second signal de validation envoyé à ceux-ci par les moyens de génération de signaux de validation (26,34) et ayant des sorties couplées aux moyens d'envoi d'adresse (22) de manière qu'une adresse de branchement verrouillée peut être envoyée aux moyens d'envoi d'adresse (22).

4. Unité selon l'une quelconque des revendications précédentes, caractérisée en ce que les moyens de génération de signal de validation comprennent des moyens (26) sensibles à la micro-instruction en cours d'exécution pour engendrer des signaux de commande indicatifs du type d'adresse pour la micro-instruction suivante à exécuter, ledit type étant sélectionné à partir de branchement, non-branchement et répétition, et des moyens (34) sensibles aux signaux de commande pour engendrer dans le cycle de micro-instruction en cours, un premier signal de validation uniquement, un premier signal de validation et un second signal de validation ou aucun signal de validation.

5. Unité selon l'une quelconque des revendications précédentes, caractérisée en ce que les moyens de mémorisation comprennent une mémoire à accès aléatoire de lecture/écriture (12) adaptée pour être chargée avec la pluralité de micro-instructions.

6. Procédé pour accéder à des micro-instructions stockées dans une mémoire adressable, comprenant les étapes de :
accéder à la mémoire (12) pendant un cycle de micro-instruction en cours avec à la fois une adresse de branchement d'une micro-instruction en cours d'exécution et une adresse de non-branchement qui est séquentielle en relation avec l'adresse de ladite micro-instruction en cours,
engendrer une adresse incrémentée à partir d'une adresse par laquelle la mémoire (12) est accédée, et
sélectionner soit une micro-instruction de branchement, soit une micro-instruction de non-branchement respectivement accédée par une adresse de branchement ou une adresse de non-branchement,
le procédé étant caractérisé en ce que l'étape de génération d'une adresse incrémentée comporte l'incrémentation de l'adresse de chaque micro-instruction accédée dans la mémoire et ainsi fournir une adresse séquentielle suivante, et stocker une adresse séquentielle suivante sélectionnée à la fin du cycle de micro-instruction en cours,
et en ce qu'un premier signal de validation et un second signal de validation sont chacun engendrés ou non en fonction de la micro-instruction en cours d'exécution, la sélection de ladite micro-instruction de branchement ou de ladite micro-instruction de non-branchement et de ladite adresse séquentielle suivante étant fonction de la génération ou non des premier et second signaux de validation.

7. Procédé selon la revendication 6, caractérisé en ce que chaque adresse de branchement pour accéder à la mémoire (12) est sélectionnée à partir d'adresses de branchement fournies par les micro-instructions accédées dans la mémoire (12), la sélection étant effectuée en fonction de la génération ou non des premier et second signaux de validation dans un cycle de micro-instruction.

8. Procédé selon la revendication 7, caractérisé en ce que la sélection de l'adresse séquentielle suivante, de la micro-instruction accédée à partir de la mémoire (12) et de l'adresse de branchement, est synchronisée par les signaux de validation.
